# EUROPEAN PATENT APPLICATION

(11) **EP 2 180 449 A1**
(43) Date of publication of application: **28.04.2010**
(21) Application number: 08167120.8
(22) Date of filing: 21.10.2008
(51) Int. Cl.: G06T 15/20

(54) **Method and device for providing a layered depth model of a scene**

(71) Applicant: Koninklijke Philips Electronics N.V., 5621 BA Eindhoven (NL); Philips Intellectual Property & Standards GmbH, 20099 Hamburg (DE)
(72) Inventor: The designation of the inventor has not yet been filed
(74) Representative: Damen, Daniel Martijn

(57) **Abstract**

The invention relates to a device and method of providing a layered depth model of a scene, the layers of the depth model comprising primary view information for a primary view of the scene from a primary viewing direction and occlusion information associated with the primary view information for use in rendering in other views of the scene, wherein: the primary view information comprises layer segments of the model which are depth-wise closest with respect to the primary viewing direction, and the occlusion information comprises further layer segments of the model and wherein the occlusion information comprises a safety region (SR1, SR2, SR3, SR4) adjacent to a depth transition for which occlusion information is provided (J1, J2, J3, J4), and wherein the safety region comprises corresponding segments of the primary view information, and wherein the safety region (SR1, SR2, SR3, SR4) is located on that side of the respective depth transition which is depth-wise farthest away with respect to the primary viewing direction. The invention further relates to a signal comprising a layered depth model of a scene as described above, as well as a computer program product implementing the method according to the invention.

## Description

### FIELD OF THE INVENTION

The invention relates to a method and device for providing a layered depth model of a three dimensional scene as well as to a signal comprising a layered depth model of a scene..

### BACKGROUND OF THE INVENTION

Display devices suitable for displaying three-dimensional images are receiving an increasing interest in research. In addition substantial research is undertaken in order to establish how to provide end-users with a satisfying, high quality viewing experience.

Three dimensional (3D) displays add a third dimension to the viewing experience by providing both eyes of a viewer with different views of the scene being watched. This can be achieved by having the user wear glasses to separate two views that are displayed. However, as glasses may be considered inconvenient to the user, it is in many scenarios preferred to use autostereoscopic displays that use means at the display (such as lenticular lenses, or barriers) to separate views, and to send them in different directions where they individually may reach the user's eyes. For stereo displays, two views are required whereas autostereoscopic displays typically require more views (such as e.g. nine views).

In order to effectively support 3D presentation it is important that a suitable data representation of the generated 3D content is used. For example, for different stereo displays the two views are not necessarily the same and an optimal viewing experience typically requires an adaptation of the content data for the particular combination of screen size and viewer distance. The same consid>erations tend to apply to autostereoscopic displays.

A popular approach for representing three dimensional images is to use one or more layered two dimensional images plus depth representation. For example, a foreground and background image each with associated depth information may be used to represent a three dimensional scene. Within the context of the application the term depth information is used to indicate information indicative of the distance of respective image elements to a viewpoint, or information indicative of the disparity of respective image elements between the two respective viewpoints. As disparity, i.e. the apparent displacement of image elements between left and right eye view, is inversely proportional to depth either representation can be used as input to render views of a layered depth model.

Using an image and depth representation has several advantages in that it allows two dimensional views to be rendered with relatively low complexity and provided an efficient data representation compared to storage of multiple views, thereby reducing e.g. storage and communication resource requirements for three dimensional image (and video) signals. The approach also allows two dimensional images to be generated with different viewpoints and viewing angles than the two dimensional images that are included in the three dimensional representation. Furthermore, the representation may easily be adapted to and support different display configurations.

When rendering a view from a different viewing angle than that represented by the layered images, foreground pixels are shifted depending on their depth. This leads to regions becoming visible that are occluded for the original viewing angle. These regions are then filled out using the background layer, or if suitable background layer data is not available by e.g. repeating pixels of the foreground image. However, such pixel replication may result in visible artifacts. The background information is typically only required around edges of foreground image objects and is accordingly highly compressible for most content.

It is known that a layered depth model of a scene can be simplified from multiple layers into two layers being a top layer and an occlusion layer. In such a model the occlusion layer is used to avoid visual artifacts related to pixel repetition or background interpolation. In prior art systems such layers are provided for some of for all possible occluded regions in view of a set number of viewing angles.

### SUMMARY OF THE INVENTION

A problem exists in that when such a layered depth model is downscaled this may result in visual artifacts during rendering. Likewise encoding a layered depth model can result in similar artifacts. This is particularly true in situations where the use of occlusion information is triggered implicitly by the content material itself; for example as a result of the presence of depth transitions in the downscaled layered depth model, rather than by means of explicitly coded metadata (which cannot be properly downscaled using text book scaling techniques).

It is an aim of the present invention to mitigate such artifacts resulting from downscaling. This aim is achieved by means of a method of providing a layered depth model of a scene, the layers of the depth model comprising primary view information for a primary view of the scene from a primary viewing direction and occlusion information associated with the primary view information for use in rendering other views of the scene, wherein: the primary view information comprises layer segments of the model which are depth-wise closest with respect to the primary viewing direction, and the occlusion information comprises further layer segments of the model and wherein the occlusion information comprises a safety region adjacent to a depth transition for which occlusion information is provided, and wherein the safety region comprises corresponding segments of the primary view information, and wherein the safety region is located on that side of the respective depth transition which is depth-wise farthest away with respect to the primary viewing direction.

Following resizing or compression of a layered depth model comprising occlusion data, e.g. for storage or transmission reasons, the representation of the layered depth model, and in particular the occlusion data will be affected. As a result a rendering device may not be able to detect a depth variation properly. In particular when the detection of such depth transitions is used to trigger the use of occlusion information this can result in clearly visible artifacts.

These artifacts in itself can be more annoying than using conventional techniques such as pixel repetition, as they are usually not time-stable and as a result stand out due to their "flickering". Alternatively resizing may result in the rendering device detecting a depth variation where there was no such transition prior to scaling. As a rule however the artifacts resulting from the latter error are less prominent.

The present invention effectively makes sure that in the safety regions, that is in regions outside and adjacent to depth transitions for which occlusion information is available, this occlusion information is made identical to that of the primary view information. As a result the detection of depth transitions in the downscaled signal, which generally involves both depth values comprised in the primary view information and in the occlusion information is improved. As a result the reliability of the triggering of the use of occlusion data on the video content itself is improved.

Typically both the primary view information and the occlusion information comprise both:
- image information which provides color/texture data for use in rendering deoccluded regions, as well as
- depth information which provides depth information for use in rendering deoccluded regions.

Using the occlusion information respective textures which become visible from another viewing angle can be rendered using appropriate displacement of the respective occlusion texture based on the viewing angle and depth information.

In an embodiment a layered depth model comprising more than two layers is collapsed into a two layer model. Such a model in its own right is again a layered depth model. In the latter layered depth model a top layer comprises the primary view information and an occlusion layer comprises the occlusion information. A clear advantage being that the top layer in fact can be used on legacy two-dimensional display devices without further processing. In case the original layered depth model also comprises transparency, the top layer can be a composite layer comprising data of multiple other layers.

In an embodiment the occlusion layer comprises segments of the top layer whenever there are no further layer segments of layers of the model that are with respect to their depth closest to the top layer. As a result the occlusion layer represents a further full image for use in rendering, and there is no need for signaling the presence of occlusion data in the occlusion layer, or run-time composition of a full occlusion layer.

In an embodiment the size of the respective segments of occlusion information in the occlusion layer information is based on a maximum deviation from the viewing angle of the primary view and the depth information in the scene. In another embodiment the size of the respective segments is based on a predetermined width on the inside of a simultaneous depth transitions in both the top layer and composite layer. In yet another embodiment the size of the respective segments is based on a predetermined width on the inside and a further predetermined width on the outside of a depth transitions for which occlusion data is available. Each of these embodiments provides an advantage, in that the first embodiment enables coding of an occlusion layer that allows proper rendering within viewing angle and depth limitations. The second embodiment enables a more storage friendly implementation. The third embodiment allows prevention of compression artifacts such as mosquito noise when coding occlusion information.

In a further embodiment the size of the safety region is based on a predetermined maximum downscale factor. This feature allows a content provider may to determine a range of resolutions wherein downscaling of occlusion information should result in minimum scaling artifacts. For example consider content distributed at a resolution of 1920 x 1080 pixels, further consider that downscaling resilience is required up to a resolution of 640x480. In this case in order to preserve a 2 pixel wide safety region at the lower resolution a 7 pixel wide safety region is introduced. Likewise the size of the safety region can be based on the granularity of the encoder used to encode the occlusion information.

As downscaling protection using the invention may be applied in both x and y directions differently, the safety region may be chosen differently for each respective direction based on the desired robustness.

In a preferred embodiment the layered depth model further comprises transparency information, at least for the primary view information. In accordance with the embodiment, the transparency values in the safety region adjacent to the depth transition are substantially transparent and the transparency value in the safety region at other end of the safety region being substantially non-transparent. Strictly speaking transparency regions are not required in the safety area for this embodiment as the primary view information and occlusion information are for this embodiment identical. However to make the layered depth model more robust to scaling a smooth transition, with or without additional safety zone is preferably applied. In a further more preferable embodiment the safety region comprises a predetermined number of consecutive transparent pixels adjacent to the depth transition possibly in addition to a gradient from substantially transparent (adjacent to the consecutive transparent pixels), to substantially non-transparent at the end of the safety region removed from the depth transition. By this particular choice of transparency values any opacity/transparency/alpha values of the top layer may be substantially preserved in the downscaling. Similarly, a pre-determined number of consecutive transparency values may be used at the end of the safety regions after the gradient to ensure that values just outside the safety area are not "pulled down" when downscaling.

Alternatively instead of using a gradient between consecutive transparent/non-transparent pixels it may also be possible to use a sharp transition, provided that it is placed on a codec block boundary. The consecutive transparent and/or consecutive non transparent pixels may be used to properly positioning the transition on a boundary. The resulting aligned transition may be coded more efficiently. This in turn may help prevent the introduction of coding artifacts resulting in improved robustness.

In a further advantageous embodiment a depth hole protection region is provided for in the primary view information for a region comprising a depth hole; i.e. a depth transition down followed by a depth transition up, not more than a first threshold number of pixels apart. For such a depth hole preferably the primary view depth information is set to either, one of the high edge depth values of the depth hole, the average of both of the high edge depth values, a gradient between the high edge depth values, or an interpolated segment based on both high edge depth values of the depth hole. In addition the transparency values between the adjacent depth jumps are preferably set to substantially transparent. As a result the depth hole is better protected against downscaling.

In a further advantageous embodiment a depth spike protection region is provided for in the primary view information for a region comprising a depth spike; i.e. a depth transition up followed by a depth transition down, not more than a second threshold number of pixels apart. For such a depth spike preferably the primary view depth information is set to the depth value of the top of the depth spike within the depth spike protection region, and the transparency values in the depth spike protection region outside the depth spike are set to substantially transparent. As a result the depth spike is better protected against downscaling.

The method according to the present invention can be advantageously applied in a method of processing a three dimensional model of a scene, by receiving a three dimensional model of a scene, providing a layered depth model of a scene according to the present invention and processing the three dimensional model of the scene.

The present invention further relates to a signal comprising a layered depth model of a scene, the layers of the depth model comprising: encoded primary view information for a primary view of the scene from a primary viewing direction the primary view information comprising layer segments of the model which are depth-wise closest with respect to the primary viewing direction and encoded occlusion information, associated with the primary view information for use in rendering other views of the scene, wherein the occlusion information comprises further layer segments of the model and wherein the occlusion information comprises a safety region adjacent to a depth transition for which occlusion information is provided, and wherein the safety region comprises corresponding segments of the primary view information, and wherein the safety region is located on that side of the respective depth transition which is depth-wise farthest away with respect to the primary viewing direction.

The present invention further relates to a device for providing a layered depth model of a scene, the layers of the depth model comprising primary view information for a primary view of the scene from a primary viewing direction and occlusion information associated with the primary view information for use in rendering other views of the scene, the device arranged to provide: the primary view information such that it comprises layer segments of the model which are with respect to their depth closest to the viewpoint of the primary view, and the occlusion information such that it comprises further layer segments of the model and wherein the occlusion information comprises a safety region adjacent to depth transition for which occlusion information is provided, and wherein the safety region comprises corresponding segments of the primary view information, and wherein the safety regions is located on that side of the respective depth transitions which is depth-wise farthest away with respect to the primary viewing direction.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, wherein like numerals refer to element with like function, in which
Fig. 1A, shows a horizontal cross section of a layered depth model of a three dimensional scene,
Fig. 1B, shows a top layer of the layered depth model of Fig. 1A,
Fig. 1C, shows a prior art occlusion layer of the layered depth model of Fig. 1A,
Fig. 1D, illustrates the concept of occlusion safety regions for the layered depth model of Fig. 1A according to an embodiment of the present invention,
Fig. 2A, illustrates the addition of transparency to the layered depth model of Fig. 1A,
Fig. 2B, illustrates the addition of transparency for safety regions according to an embodiment of the present invention,
Fig. 3, illustrates the addition of transparency for a safety region adjacent to a depth transition in accordance with a preferred embodiment of the present invention,
Fig. 4A, illustrates the depth hole protection process for primary view information,
Fig. 4B, illustrates the depth spike protection process for primary view information,
Fig. 5, illustrates a method according to the present invention,
Fig. 6A, illustrates a processing device and signal according to the present invention,
Fig. 6B, illustrates a device and signal according to the present invention,
Fig. 6C, illustrates a further device and signal according to the present invention,
Fig. 7A, illustrates respective excerpts of texture, depth, occlusion texture, and occlusion depth information of a two layer depth model according to the prior art,
Fig. 7B, illustrates respective excerpts of texture, depth, occlusion texture, and occlusion depth information of a two layer depth model according to an embodiment of the present invention,
Fig. 7C, illustrates a rendered view based on the input data of Fig. 7A and
Fig. 7D, illustrates a rendered view based on the input data of Fig. 7B.

### DETAILED DESCRIPTION OF THE INVENTION

The use of layered depth representation for use in rendering new views based on a layered depth representation has attracted researchers over time. In "Layered Depth Images", Shade et. al, published in Proceedings of ACM SIGGRAPH 1998 storage of a three dimensional model based on a multi-layer depth image is described as well as the rendering of content based thereon.

In "High-quality video view interpolation using a layered representation", by Zitnick, et al, published in Proceedings of ACM SIGGRAPH 2004, the generation of a layered depth model of a scene is disclosed, wherein the layered depth model comprises occlusion information in the form of boundary color, boundary depth and boundary alpha (opacity). In addition a method of rendering of views from the layered depth model is presented.

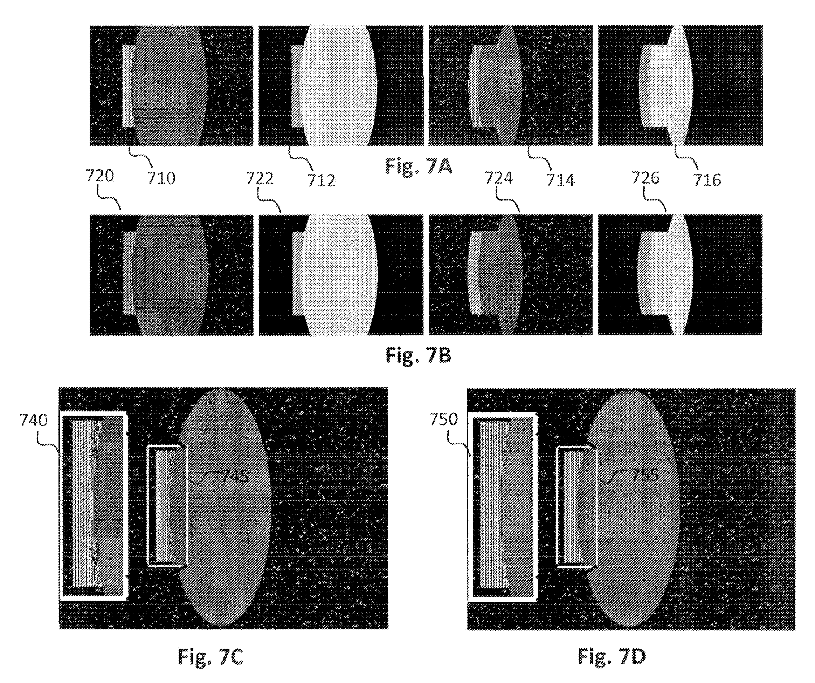

The inventors of the present invention realized that in practice when content is distributed using a layered depth mode, it may be required to downscale and/or compress the layered depth model. However when software scalers or hardware scalers are used for doing so which are agnostic of the problem(s) as addressed by the present invention, this generally results in visible artifacts. An example of such artifacts is shown in Fig. 7C, wherein the artifacts in region 745 are shown enlarged in the region 740.

The above described problem particularly holds for situations wherein depth information from the layered depth model is being used to trigger the use of occlusion information. In such a situation downscaling of the layered depth model may affect the primary view information and occlusion information in such a manner that depth transitions are no longer properly recognized, or alternatively, are recognized where they were not present prior to the downscaling.

A possible heuristic for coding occlusion information is provided below. It is noted that this is merely exemplary and other trigger mechanisms may be employed. However from this description it will be clear that downscaling of the depth information in both primary view and/or occlusion information may affect the proper triggering of the use of occlusion information.

### Occlusion information should be provided for a depth transition when:

The low pixels of the primary view information and occlusion information are similar; e.g. a fixed threshold may be used,

The high pixel in the primary view information of the transition must be significantly larger than the pixel of the occlusion information; e.g. a further fixed threshold may be used and

The high pixel of the primary view information must be significantly larger than the low pixel of the primary view information. (This avoids detecting transitions when the primary view information is uniform and the occlusion information suddenly "drops". The present invention addresses this downscaling issue in that it provides a solution that allows rendering of the model after downscaling in a manner that results in less artifacts, as is depicted in Fig. 7D, wherein region 755 (compare 745) shows the artifacts and region 750 provides a blow-up of region 755.

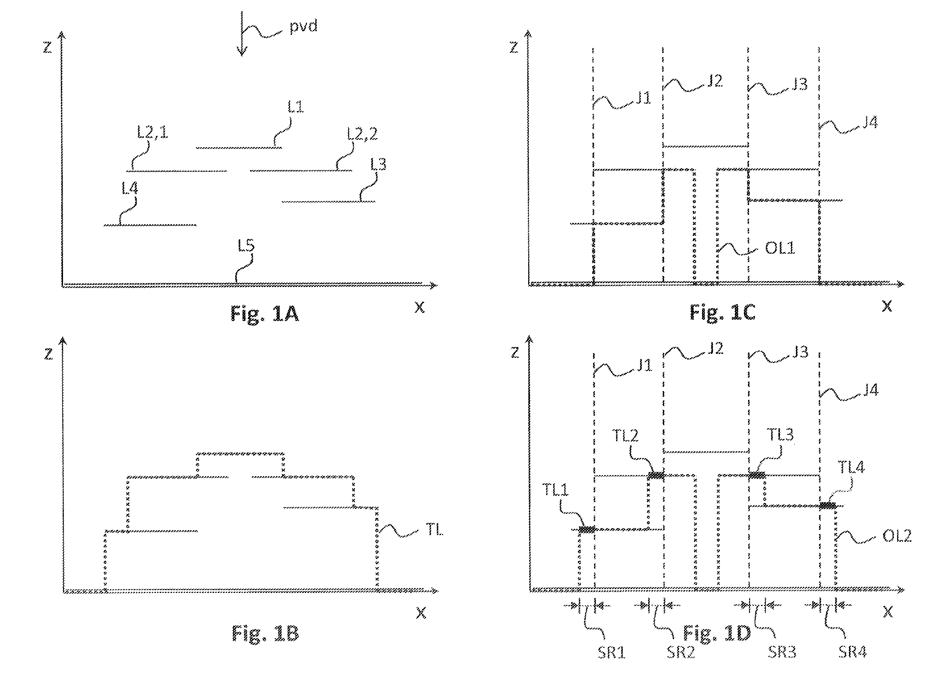

Fig. 1A presents a horizontal cross section of a layered depth model of a three dimensional scene. This particular model comprises five layers; being the layer L1, the layer L2 comprising segments L2,1 and L2,2, the layers L3 and L4 and a background layer L5. Although in this example all layers are represented by horizontal lines, i.e. have a single depth value throughout, this is not mandatory, but merely a simplification for the sake of clarity. It is noted that the depth within a layer typically will vary. In practice when using object based coding, such in-layer depth variations generally relate to the object depth.

When the layered depth image as presented in Fig. 1A is being rendered for observation from the primary viewing direction PVD, the resulting view will comprise layer segments of the layers of the model which are with respect to their depth closest to the viewpoint of the primary view. These segments combined form a top layer TL.

For determining the top layer, the camera model used to generate the occlusion layer is a camera placed at infinity with a primary viewing direction indicated by PVD. As a result the top layer in the layered depth image is that layer that at a certain position (x,y) is depth wise closest to the camera, in this case the highest layer.

Figure 1C illustrates the segments of the layered depth model that form an occlusion layer in accordance with the prior art. The occlusion layer comprises further layer segments of layers of the model that are with respect to their depth closest to the top layer as indicated in Fig. 1C by the occlusion layer OL. As a result when there is a further layer depth-wise behind the top layer, that layer provides occlusion information. It is noted that in the figures behind, as a result of the viewing direction PVD corresponds with below. As the occlusion layer in this example is below the top layer, the occlusion layer typically changes layer together with discontinuities or jumps in the top layer as indicated using by jump J1, J2, J3 and J4.

With regard to the occlusion layer OL it is noted that although in Fig. 1C the center segment below L1 is included in the occlusion layer, this is not mandatory. In fact as there is only a very low probability that a rendered view would require rendering of this segment of the occlusion layer, it could be deleted from the model entirely, thereby saving storage space. By not including this information it may be necessary to fall back on interpolation or pixel repetition to fill in such a hole in the occlusion layer during rendering.

The above clearly shows that heuristics may play an important role within determining what is included in an occlusion layer and what is not.

Fig. 1D illustrates occlusion information, here in the form of an occlusion layer OL2, in accordance with the present invention. As illustrated in Fig. 1D, segments of the occlusion layer in a safety region SR1, SR2, SR3 or SR4 adjacent to simultaneous depth transitions J1, J2, J3 or J4 in both the top layer TL and occlusion layer are replaced by corresponding segments of the top layer TL1, TL2, TL3 or TL4. The safety region is positioned on the outside of the depth transition, which corresponds to that side of the depth transition in the top layer where the depth values are lowest with respect to the primary viewing direction PVD.

The occlusion layers and the depth layers presented in the Figs. 1A-1D comprise both texture information (here black/grey) as well as depth information (z-component).

It will be clear to the skilled person that the layered depth model comprising the primary view information and the occlusion information OL2 as shown in Fig. 1D can be encoded in a wide variety of ways. A first approach would e.g. be to code the layered depth model as shown in Fig. 1A and in addition encode information regarding the safety regions TL1, TL2, TL3 and TL4 as being occlusion information. Another approach would be to encode the top layer as presented in Fig. 1B and the occlusion layer OL2 as presented in Fig. 1D and use these two in conjunction as a simplified layered depth model. However regardless of how the layered depth model is encoded, in the safety regions the occlusion information OL2 corresponds to the top layer information TL, this is what sets apart the layered depth model in accordance with the present invention.

The occlusion layer OL as presented in Fig. 1C corresponds with an occlusion layer wherein every pixel is assigned a luminance and depth value. As a result run-time composition of the occlusion layer is not required.

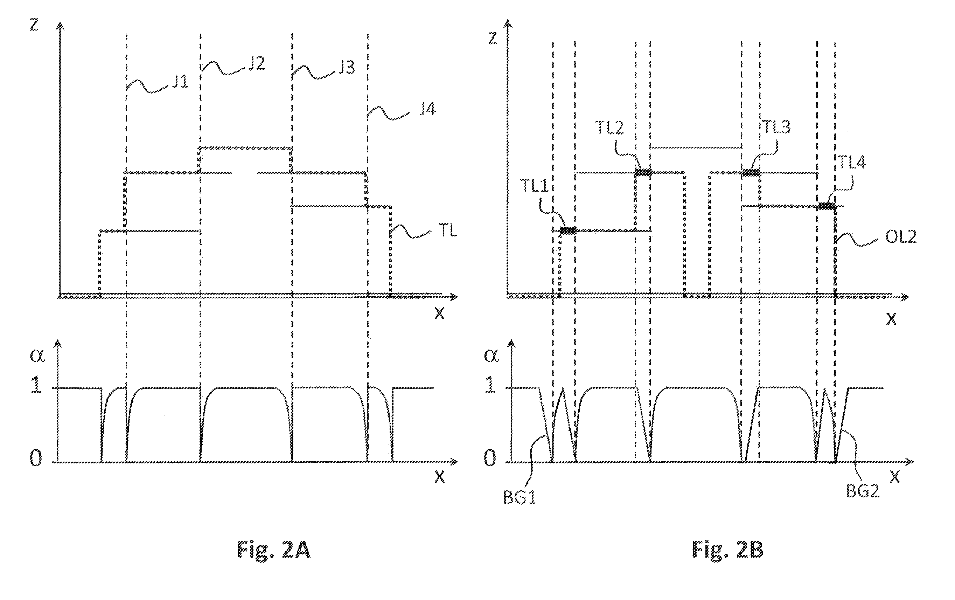

Fig. 2A shows a layered depth image, including a top layer TL, corresponding with that of Fig. 1A. In addition Fig. 2A illustrates the use of transparency for segments of the top layer TL in order to obtain smooth object edges in rendering. Here transparency is used to prevent the occurrence of jagged edges. It is noted that towards the ends of respective segments of layers the alpha value corresponding with opacity is reduced leading to transparent edges in the top layer of layered depth model.

Fig. 2B shows a layered depth image, including an occlusion layer according to an embodiment of the present invention as described with reference to Fig. 1D. Included in Fig. 2B is transparency information of the top layer TL, which has been provided in accordance with an embodiment of the present invention with amended transparency/opacity values for the safety regions. Although strictly speaking transparency regions are not required in the safety regions as indicated hereinabove, adding such information may improve downscaling or compression of the layered depth model.

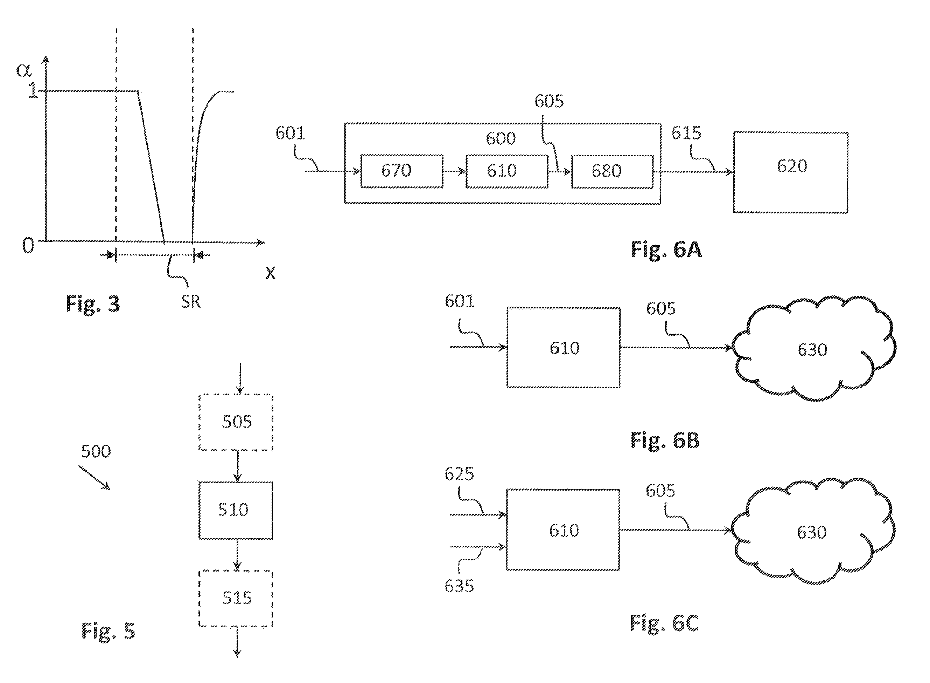

Fig. 3 shows a further refinement of the transparency values within a safety region in accordance with a preferred embodiment of the present invention. In this figure a predetermined number of consecutive fully transparent pixels is positioned adjacent to the depth transition. Likewise on the left hand side of the transition a predetermined number of consecutive fully opaque pixels are used. As a result of the presence of these additional transparent/opaque pixels in the safety region, the influence of the transparency gradient of the safety region on the transparency of the scaled top layer is kept to a minimum. As a result of these pixels the primary view transparency information will remain substantially unaffected by the transparency gradient in the safety region.; i.e. provided that the number of fully transparent pixels is chosen sufficiently large to compensate for the downscaling factor.

Although the invention has been described for providing a safety region along a horizontal direction, i.e. along the direction of the x-axis, the present invention can also be advantageously applied along a vertical direction.

For example, when downscaling content provided at a maximum resolution of 1920 x 1080, which has to be able to be down scaled to 640 x 480, that is a downscaling factor of 3 in the horizontal direction a 7 pixel wide safety region is preferably introduced in the horizontal direction. It is preferred to have a 2 pixel safety region to prevent coding from affecting layer boundaries. As a result it would theoretically suffice to use a 6 pixel safety region. In practice as a result of e.g. asymmetric filter kernels a 7 pixel wide safety region is preferred. As artifacts in vertical direction for many current applications are less relevant a 3 pixel safety region is applied there.

The ratio of using safety region for the protection of occlusion data is illustrates in Fig. 7A-7D. Fig. 7A provides a set of excerpts of input images representing the top layer and occlusion layer of a layered depth image. Image 710 provides an excerpt of a color image, in which an elliptic object is partially occluding a rectangular striped object. Image 712 provides an excerpt which shows the corresponding depth map wherein brighter tones are closer to the "camera", together the images 710 and 712 form the top layer. Likewise an occlusion layer is provided by images 714, 716 comprising an occlusion color image and an occlusion depth map respectively.

Fig. 7B provides a set of excerpts of input images 720, 722, 724 and 726 corresponding to respective images 710, 712, 714 and 716, with the exception that the occlusion layer was generated in accordance with an embodiment of the present invention. In particular it is noted that color information and depth information of the top layer belonging to the striped rectangular object cover a larger area in the occlusion layer in Fig. 7B than in Fig. 7A (i.e., less occlusion information of stars behind the striped rectangle). This is the result of top layer information being "copied" in the occlusion layer.

Fig. 7C shows a rendered view based on input images of which excerpts are shown in Fig. 7A; i.e. a rendered view based on an occlusion layer in accordance with the prior art (after coding/decoding). Fig 7C shows substantial rendering artifacts as indicated in region 745 and once more enlarged in region 740.

Fig. 7D shows a rendered view based on input images of which excerpts are shown in Fig. 7A; i.e. based on an occlusion layer (after coding/decoding) in accordance with the present invention. Fig. 7D shows substantially less artifacts as indicated in region 755 and once more enlarged in region 750.

An occlusion layer as described hereinabove may be advantageously used for storing or distribution of content. As a result thereof content which was provided with a so processed occlusion layer may be downscaled using downscaling tools commonly available at the priority date. Such content is also more resilient to coding/decoding. Moreover there is no need to tune such scaling algorithms to cater for particular idiosyncrasies of the actual occlusion format used, instead typically the occlusion information may be downscaled in a manner similar to conventional two-dimensional images. Alternatively, the method described herein may be applied just before downscaling (not necessarily at the content creation side). Or it may be applied at the content creation side with safety margins large enough to protect against coding, but not necessarily against large downscale factors, and then again later with larger safety margins tailored to an upcoming downscale operation.

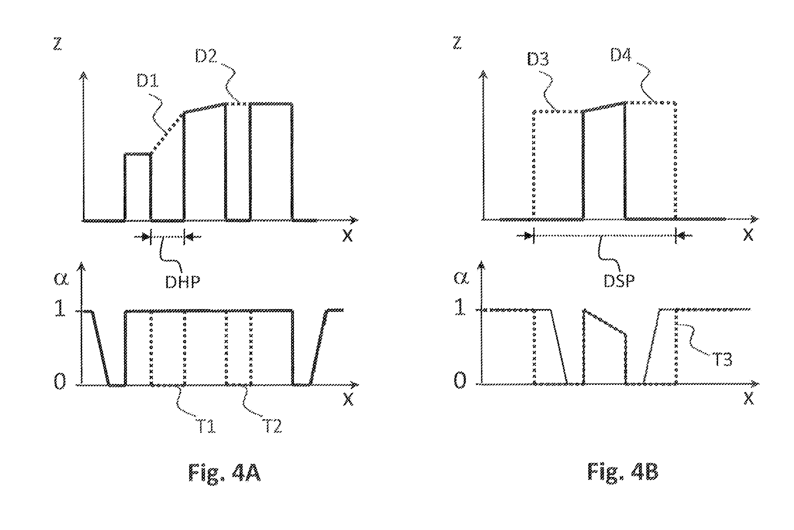

Fig. 4A illustrates the concept of a depth hole protection region DHP for primary view information in accordance with a further embodiment of the present invention. Figure 4A shows a depth profile comprising two holes. Provided such holes are sufficiently narrow, that is the width of the depth hole protection region DHP is below a first threshold, e.g. 3 pixels when downscaling by a factor 3, the depth hole after scaling may completely disappear. Fig. 4A illustrates the depth hole protection scheme which is complementary to occlusion information safety regions.

In Fig. 4A, two holes in the primary view information are "patched" by setting the depth values for the sections D1 and D2 to values that represent a linear interpolation of the high edges of the depth hole. In addition the opacity of the sections D1 and D2 is set to 0; i.e. they are made transparent. As a result of this approach the two depth holes in the primary view information are effectively replaced by two transparent "windows" which are less likely to cause artifacts.

Fig. 4B illustrates the concept of a depth spike protection region DSP for primary view information in accordance with an embodiment of the present invention. Figure 4B shows a depth profile comprising a depth spike. Provided such a spike is sufficiently narrow, that is the width of the spike is below a certain number of pixels, e.g. 3 pixels when downscaling by a factor 3, the depth spike after scaling may completely disappear. Fig. 4B illustrates the depth spike protection scheme which is complementary to occlusion information safety regions.

In Fig. 4B, the spike in the primary view information is extended by setting the depth values for the sections D3 and D4 to values that represent a continuation of the high edges of the spike. In addition the opacity of the sections D3 and D4 is set to 0; i.e. they are made transparent. As a result of this approach the spike is made broad enough to survive the scaling process, but the "side lobes" are made transparent by means of the transparency values.

Fig. 5 shows a flowchart of a method of processing 500 a layered depth model of a scene. The method comprises a step of obtaining 505 a three dimensional model of a scene, which may be a layered depth model or a wireframe model, or other suitable three dimensional scene model.

The method further comprises providing 510 a layered depth mode of the scene, wherein the layered depth model comprises primary view information for a primary view of the scene from a primary viewing direction and occlusion information associated with the primary view information for use in rendering in other views of the scene. The primary view information in turn comprises layer segments of the model which are depth-wise closest with respect to the primary viewing direction. The occlusion information comprises further layer segments of the model. The occlusion information comprises a safety region adjacent to a depth transition for which occlusion information is provided. The safety region in turn comprises corresponding segments of the primary view information and the safety region is located on that side of the respective depth transition which is depth-wise farthest away with respect to the primary viewing direction.

Optionally the method depicted in Fig. 5 may further comprise a step of processing 515 the layered depth model, such as by downscaling, coding, storing, transmitting and/or alternatively rendering.

Fig. 6A shows a device 600 for processing a three dimensional model of a scene. The device comprises receiving means 670 arranged to receive a three dimensional model of a scene. The receiving means may be a receiver for receiving information from a wireless network, or an alternative input unit, for acquiring a three dimensional model of a scene, e.g. from a data carrier.

The device 600 further comprises a device 610 for providing a layered depth model 605 of a scene. The layers of the depth model 605 as provided comprise primary view information for a primary view of the scene from a primary viewing direction and occlusion information associated with the primary view information for use in rendering other views of the scene. The device 610 is arranged to provide the primary view information such that it comprises layer segments of the model which are with respect to their depth closest to the viewpoint of the primary view, and the occlusion information such that it comprises further layer segments of the model. The occlusion information comprises a safety region adjacent to depth transition for which occlusion information is provided, and wherein the safety region comprises corresponding segments of the primary view information, and wherein the safety regions is located on that side of the respective depth transitions which is depth-wise farthest away with respect to the primary viewing direction.

Optionally the device further comprises processing means 680 which can be e.g. a general purpose processor, an ASIC or other processing platform, for processing the layered depth model 605. The processing may comprise e.g. downscaling, coding, storing, transmitting and/or alternatively rendering.

The device 610 as presented in Fig. 6A may also be arranged to output the signal 615 stand alone to a consuming device 620, or alternatively as shown in Fig 6B, the signal 615 may be distributed over a network 630, which can be e.g. an in-home network, another intranet, or the Internet.

Although the device 610 has been described for processing a three dimensional model of a scene, the three dimensional model of a scene may also be a layered depth model, which in a particularly advantageous case can be a two layer mode comprising a top layer 625 which may also be referred to as composite layer and an occlusion layer 635 as shown in Fig. 6C.

It will be appreciated that the above description for clarity has described embodiments of the invention with reference to different functional units and processors. However, it will be apparent that any suitable distribution of functionality between different functional units or processors may be used without detracting from the invention. For example, functionality illustrated to be performed by separate units, processors or controllers may be performed by the same processor or controllers. Hence, references to specific functional units are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements or method steps may be implemented by e.g. a single unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc do not preclude a plurality. Reference signs in the claims are provided merely as a clarifying example shall not be construed as limiting the scope of the claims in any way.

## Claims

1. Method of providing (510) a layered depth model (605) of a scene, the layers of the depth model (605) comprising primary view information for a primary view of the scene from a primary viewing direction (PVD) and occlusion information associated with the primary view information for use in rendering other views of the scene, wherein:
- the primary view information comprises layer segments of the model which are depth-wise closest with respect to the primary viewing direction, and
- the occlusion information comprises further layer segments of the model and wherein the occlusion information comprises a safety region (SR) adjacent to a depth transition for which occlusion information is provided (J1, J2, J3, J4), and wherein the safety region comprises corresponding segments of the primary view information, and wherein the safety region (SR) is located on that side of the respective depth transition which is depth-wise farthest away with respect to the primary viewing direction.

2. Method of claim 1, wherein
the primary view information and the occlusion information each comprise both image information and depth information.

3. Method of claim 1, wherein
the layered depth model (605) is a two layer model comprising:
- a top layer (TL) encoding the primary view information and
- an occlusion layer (OL2) encoding the occlusion information.

4. Method of claim 3, wherein
the occlusion layer (OL2) comprises corresponding segments of the top layer (TL) whenever there is no other information available.

5. Method of anyone of claims 1-4, wherein
the size of the occlusion information is based on one of:
- a width based on a maximum deviation from the viewing angle of the primary view and the depth information,
- a predetermined width on the one side of a depth transition and
- a predetermined width on the one side and a further predetermined width on the other side of a depth transition.

6. Method of anyone of claims 1-4, wherein
the size of the safety region (SR) is based on one of
- a predetermined maximum downscale factor and
- a granularity of an occlusion information codec.

7. Method of anyone of the preceding claims, wherein
the layered depth model (605) further comprises
- transparency information for the primary view information, wherein the transparency value in the safety region (SR) adjacent to the depth transition is substantially transparent and the transparency value in the safety region at other end of the safety region is substantially non-transparent.

8. Method of claim 7, wherein
the transparency values in the safety region (SR) comprise one of
- a gradient from substantially transparent adjacent to the depth transition, to substantially non-transparent at the other end of the safety region,
- a predetermined number of consecutive substantially transparent pixels adjacent to the depth transition,
- a predetermined number of consecutive substantially transparent pixels adjacent to the depth transition and a further predetermined number of consecutive substantially non-transparent pixels at the other end of the safety region,
- a predetermined number of consecutive substantially transparent pixels adjacent to the depth transition and a gradient from substantially transparent adjacent to the consecutive fully transparent pixels to substantially non-transparent,
- a predetermined number of consecutive substantially transparent pixels adjacent to the depth transition and a gradient from substantially transparent adjacent to the consecutive fully transparent pixels to substantially non-transparent followed by a further predetermined number of consecutive substantially non-transparent pixels and
- a predetermined number of consecutive substantially transparent pixels adjacent to the depth transition and a sharp transition from substantially transparent adjacent to the consecutive fully transparent pixels to substantially non-transparent, the transition aligned with a block boundary of a video codec, the transition followed by a further predetermined number of consecutive substantially non-transparent pixels.

9. Method of claim 7 or 8, wherein
in the primary view information a depth hole protection region (DHP) is provided for a region comprising a depth hole having a width below a first threshold width, and where in the depth hole protection region:
- the primary view depth information (D1,D2) is based on both high edge depth values of the depth hole and
- the transparency values (T1, T2) between the adjacent depth jumps are set to substantially transparent.

10. Method of anyone of claims 7-9, wherein
in the primary view information a depth spike protection region (DSP) is provided for a region comprising a depth spike having a width below a second threshold width, and where in the depth spike protection region:
- the primary view depth information is set to the depth value of the top of the depth spike within the depth spike protection region, and
- the transparency values in the depth spike protection region outside the depth spike are set to substantially transparent.

11. Method of processing (500) a three dimensional model of a scene, the method comprising:
- obtaining (505) a three dimensional model of a scene,
- providing (510) a layered depth model of the scene according to anyone of claims 1-10 and
- processing (515) the three dimensional model of the scene.

12. Signal (615) comprising a layered depth model (605) of a scene, the layers of the depth model (605) comprising:
- encoded primary view information for a primary view of the scene from a primary viewing direction (PVD) the primary view information comprising layer segments of the model which are depth-wise closest with respect to the primary viewing direction and
- encoded occlusion information, associated with the primary view information for use in rendering other views of the scene, wherein the occlusion information comprises further layer segments of the model and wherein the occlusion information comprises a safety region (SR) adjacent to a depth transition for which occlusion information is provided (J1, J2, J3, J4), and wherein the safety region comprises corresponding segments of the primary view information, and wherein the safety region (SR) is located on that side of the respective depth transition which is depth-wise farthest away with respect to the primary viewing direction.

13. Signal of claim 12, wherein
the layered depth model is a two layer model comprising:
- a top layer (TL) encoding the primary view information and
- an occlusion layer (OL2) encoding the occlusion information.

14. Device (610) for providing a layered depth model (605) of a scene, the layers of the depth model (605) comprising primary view information for a primary view of the scene from a primary viewing direction (PVD) and occlusion information associated with the primary view information for use in rendering other views of the scene, the device (610) arranged to provide:
- the primary view information such that it comprises layer segments of the model which are with respect to their depth closest to the viewpoint of the primary view, and
- the occlusion information such that it comprises further layer segments of the model and
wherein the occlusion information comprises a safety region (SR) adjacent to depth transition for which occlusion information is provided (J1, J2, J3, J4), and wherein the safety region (SR) comprises corresponding segments of the primary view information, and wherein the safety regions (SR) is located on that side of the respective depth transitions which is depth-wise farthest away with respect to the primary viewing direction.
14.vice (600) for processing a three dimensional model of a scene, the device comprising:
- receiving means (670) arranged to receive a three dimensional model of a scene,
- device (610) according to claim 13 arranged to provide a layered depth model based on the three dimensional model of the scene and.
- processing (680) means arranged to process the layered depth model.

15. A computer program product, comprising program instructions for executing the method of anyone of claims 1-11.
